# EUROPÄISCHE PATENTANMELDUNG

(11) **EP 4 763 674 A1**
(43) Veröffentlichungstag der Anmeldung: **24.06.2026**
(21) Anmeldenummer: 25221146.1
(22) Anmeldetag: 05.12.2025
(51) Int. Cl.: B62D 21/15, B62D 33/06

(54) **VERSTÄRKUNGSELEMENT UND SICHERHEITSANORDUNG MIT EINEM VERSTÄRKUNGSELEMENT**

(30) Priorität: 20.12.2024 DE 102024139295
(71) Anmelder: ENGINIUS GmbH, 27711 Osterholz-Scharmbeck (DE)
(72) Erfinder: Gad, Krzysztof, 44805 Bochum (DE)
(74) Vertreter: Regler, Markus Egid

(57) **Zusammenfassung**

Die Erfindung betrifft ein Verstärkungselement (3) für die Fahrerkabine (1) eines Nutzfahrzeugs mit einem sich in Fahrzeuglängsrichtung erstreckenden Basisabschnitt (7) und einem sich am frontseitigen Ende des Basisabschnitts (7) in Fahrzeughochrichtung nach oben erstreckenden ersten Arm (6) und einem sich am heckseitigen Ende des Basisabschnitts (7) in Fahrzeughochrichtung nach unten erstreckenden zweiten Arm (11), wobei der Basisabschnitt (7) zumindest abschnittsweise zwei voneinander beabstandete Seitenwände (17) und einen diese verbindenden ersten Steg (18) aufweist, wobei der erste Arm (6) zumindest abschnittsweise zwei voneinander beabstandete Seitenflächen (19) und einen diese verbindenden zweiten Steg (20) aufweist, wobei der zweite Arm (11) zwei Seitenabschnitte (21) aufweist, die an ihrem freien Ende durch eine Brücke (12) verbunden sind.

Die Erfindung betrifft weiterhin eine Sicherheitsanordnung für ein Nutzfahrzeug mit zumindest einem Verstärkungselement (3), wobei der erste Arm (6) mit einem frontseitigen Rahmenelement der Fahrerkabine (1) verbunden ist, wobei der Basisabschnitt (7) mit einem Längsträger (8) der Fahrerkabine (1) verbunden ist, wobei der zweite Arm (11) beabstandet zu einem Fahrgestellrahmen (10), insbesondere zu einem Längsrahmenelement (13) eines Fahrgestellrahmens (10), angeordnet ist.

## Beschreibung

Die Erfindung betrifft ein Verstärkungselement mit den Merkmalen von Patentanspruch 1 und eine Sicherheitsanordnung mit einem Verstärkungselement mit den Merkmalen von Patentanspruch 11.

Nutzfahrzeuge unterliegen strengen Anforderungen hinsichtlich der Sicherheit der Insassen der Fahrerkabine im Crashfall, wie sie beispielsweise in der Regelung ECE R29-03 festgelegt sind. Bei einer frontseitigen Krafteinwirkung können die Rahmenelemente in die Fahrerkabine eindringen und die Insassen verletzen. Um diesem entgegenzuwirken, ist es möglich, den gesamten Rahmen der Fahrerkabine zu verstärken und diese so stabiler zu machen. Das bringt dem Nachteil mit sich, dass sich das Gewicht der Fahrerkabine und die Herstellungskosten erhöhen.

Es ist die Aufgabe der Erfindung, ein gewichtsoptimiertes Sicherheitskonzept für die Fahrerkabine eines Nutzfahrzeugs vorzuschlagen. Diese Aufgabe wird gelöst durch ein Verstärkungselement gemäß Patentanspruch 1 und eine Sicherheitsanordnung mit einem Verstärkungselement gemäß Patentanspruch 11. Vorteilhafte Weiterbildungen der Erfindung sind Gegenstand der abhängigen Ansprüche.

Die Erfindung betrifft ein Verstärkungselement für die Fahrerkabine eines Nutzfahrzeugs mit einem sich in Fahrzeuglängsrichtung erstreckenden Basisabschnitt und einem sich am frontseitigen Ende des Basisabschnitts in Fahrzeughochrichtung nach oben erstreckenden ersten Arm und einem sich am heckseitigen Ende des Basisabschnitts in Fahrzeughochrichtung nach unten erstreckenden zweiten Arm, wobei der Basisabschnitt zumindest abschnittsweise zwei voneinander beabstandete Seitenwände und einen diese verbindenden ersten Steg aufweist, wobei der erste Arm zumindest abschnittsweise zwei voneinander beabstandete Seitenflächen und einen diese verbindenden zweiten Steg aufweist, wobei der zweite Arm zwei Seitenabschnitte aufweist, die an ihrem freien Ende durch eine Brücke verbunden sind.

Die Richtungsangaben beziehen sich auf die Einbaulage des Verstärkungselements. Es ist an der Frontseite der Fahrerkabine angeordnet und verläuft mit dem Basisabschnitt unterhalb dieser und endet mit dem zweiten Arm an einem Fahrgestellrahmen. Daher nimmt es bei einem Frontzusammenstoß die einwirkenden Kräfte mit dem ersten Arm auf und leitet sie in den Fahrgestellrahmen ab. Damit wird verhindert, dass Teile des Fahrzeugrahmens in den Innenraum der Fahrerkabine eindringen.

Da die einwirkenden Kräfte von dem Rahmen der Fahrerkabine abgeleitet werden, kann dieser idealerweise unverändert beibehalten werden. Damit werden Gewicht und Kosten minimiert.

Das Verstärkungselement ist als Blechbauteil ausgestaltet. Die einzelnen Komponenten sind vorzugsweise miteinander verschweißt. Dadurch kann das Verstärkungselement durch kleine Änderungen in der Fertigung optimal auf das jeweilige Nutzfahrzeug und die vorherrschenden Crashverhältnisse angepasst werden, in dem es zum Einsatz kommen soll. Dabei wird der zur Verfügung stehende Bauraum optimal ausgenutzt.

Die einzelnen Komponenten können einfache Biege- und Stanzbauteile sein, die miteinander verschweißt sind. Es können aber auch einzelne Komponenten oder Komponentengruppen als Umformteil, insbesondere Kaltumformteil, hergestellt werden Die Ausgestaltung des Basisabschnitts und der Arme zumindest abschnittsweise als C- oder Hohlprofile bieten eine hohe Stabilität und Steifigkeit bei gleichzeitig geringem Gewicht.

In einer Ausgestaltung der Erfindung weist der erste Arm an seinem freien Ende eine Anbindungsstelle auf. Mit dieser kann er mit dem Rahmen der Fahrerkabine verbunden werden, so dass dort einwirkende Kräfte aufgenommen werden. Das freie Ende des ersten Arms ist vorzugsweise abgewinkelt. Die Verbindung zwischen dem ersten Arm und dem Rahmen wird bevorzugt schraubtechnisch hergestellt. Dazu ist ein Schraubloch vorgesehen, das zusätzlich mit einer Schraubhülse versehen werden kann. Vorteilhafterweise ist das Schraubloch in einem angeschweißten Metallelement vorgesehen. Damit kann die Anbindungsstelle für den jeweiligen Einsatzzweck optimiert werden.

In einer weiteren vorteilhaften Ausgestaltung der Erfindung ist vorgesehen, dass ein Endabschnitt des ersten Arms als Sollbiegestelle ausgebildet ist. Das bedeutet, dass der erste Arm bei Krafteinwirkung verformt wird und somit bereits Energie abgebaut wird. Eine Sollbiegestelle kann beispielsweise durch gezielte Schwächung des Materials erzeugt werden, beispielsweise indem Ausnehmungen oder Ausbuchtungen eingefügt werden, die Materialstärke lokal verringert wird oder die Festigkeit des Materials durch eine Wärmebehandlung lokal reduziert wird.

Bevorzugt ist in dem Endabschnitt nur an einem längsseitigen Rand des zweiten Steges eine Seitenfläche ausgebildet. Dadurch wird die Steifigkeit des ersten Armes in dem Endabschnitt lokal verringert, wodurch der erste Arm an dieser Stelle leichter verformbar ist. Gleichzeitig wird Material und damit Gewicht eingespart.

In einer weiteren Ausgestaltung der Erfindung ist der Abstand der Seitenwände des Basisabschnitts frontseitig größer als heckseitig, so dass das frontseitige Ende des Basisabschnitts als Aufnahmebereich für ein Gummilager ausgebildet ist. Durch die Anbindung über ein Gummilager zum Beispiel an dem Fahrgestellrahmen wird ein Verbindungspunkt zwischen der Fahrerkabine und dem Fahrgestellrahmen geschaffen, die zudem durch das Gummilager voneinander entkoppelt sind.

Bevorzugt weist dass das frontseitige Ende des Basisabschnitts verbreiterte Seitenwände auf, die mit fluchtenden Lageröffnungen versehen sind. Durch verbreiterten Seitenwände wird der Aufnahmebereich für das Gummilager lokal versteift. Eine Verbreiterung der Seitenwände kann beispielsweise durch eine lokale Erhöhung der Wanddicke erreicht werden oder indem ein weiteres Blechteil an der Seitenwand angeordnet wird. In die Lageröffnungen kann das Gummilager mit geringem Montageaufwand eingebracht werden.

In einer weiteren Ausgestaltung der Erfindung ist vorgesehen, das Verstärkungselement ein Grundelement umfasst, das den Basisabschnitt, die Seitenabschnitte des zweiten Arms und einen ersten Abschnitt des ersten Arms bildet. Das Grundelement bildet einen Basiskörper, der mit weiteren Blechteilen an den jeweiligen Einsatzzweck angepasst werden kann. Dadurch werden vorteilhaft der Fertigungsaufwand und die Lagerhaltung verringert.

Insbesondere ist bevorzugt ein zweiter Abschnitt des ersten Arms aus einem mit dem Grundelement verbundenen Blechteil gebildet. Dadurch kann die Länge des ersten Arms an die Rahmenstruktur der Fahrerkabine angepasst werden. Zudem kann das Crashverhalten, beispielsweise das Verformungsverhalten, des Verstärkungselements durch die Geometrie, etwa die Materialdicke, des zweiten Abschnitts gesteuert werden.

Gemäß einer weiteren Ausgestaltung der Erfindung sind die Seitenwände des Basisabschnitts und/oder die Seitenflächen des ersten Arms und/oder die Seitenabschnitte des zweiten Arms einstückig, materialeinheitlich ausgebildet. Dadurch wird die Stabilität des Verstärkungselements verbessert und der Herstellungsprozess durch Vermeidung von Fügeprozessen vereinfacht.

Weiterhin bevorzugt ist vorgesehen, dass die Seitenwände des Basisabschnitts und/oder die Seitenflächen des ersten Arms und/oder die Seitenabschnitte des zweiten Arms zumindest bereichsweise mit ersten Verstärkungskomponenten versehen sind. Die ersten Verstärkungskomponenten sind vorzugsweise stoffschlüssig mit den übrigen Komponenten, beispielsweise dem Basisabschnitt, verbunden. Sie erhöhen die Stabilität und Festigkeit des Verbindungselements. Gleichzeitig ist es möglich das Verhalten des Verstärkungselements im Crashfall flexibel und an den Einsatzfall angepasst, insbesondere lokal, zu variieren.

Weiterhin bevorzugt sind zwischen den Seitenwänden des Basisabschnitts und/oder den Seitenflächen des ersten Arms und/oder den Seitenabschnitten des zweiten Arms zumindest abschnittsweise zweite Verstärkungskomponenten angeordnet. Auch die zweiten Verstärkungskomponenten sind bevorzugt stoffschlüssig mit den übrigen Komponenten verbunden. Sie erhöhen die Stabilität und Festigkeit des Verbindungselements und ermöglichen eine flexible und an den Einsatzfall angepasste, insbesondere lokale, Variation des Verhaltens im Crashfall.

Eine weitere Ausgestaltung der Erfindung sieht vor, dass an der Brücke des zweiten Arms ein Gummielement angeordnet ist. Wie unten noch dargestellt wird, ist der zweite Arm nicht unmittelbar mit einer weiteren Fahrzeugkomponente verbunden, kommt aber mit einer solchen im Crashfall in Anlage, um die Krafteinleitung in die Fahrzeugkomponente zu ermöglichen. Das Gummielement federt im normalen Fahrzeugbetrieb vorkommende Berührungen zwischen dem Verstärkungselement und der Fahrzeugkomponente ab und vermeidet unerwünschte Geräuschentwicklung.

Die Erfindung betrifft weiterhin eine Sicherheitsanordnung für ein Nutzfahrzeug mit zumindest einem Verstärkungselement wie vorstehend beschrieben, wobei der erste Arm mit einem frontseitigen Rahmenelement der Fahrerkabine verbunden ist, wobei der Basisabschnitt mit einem Längsträger der Fahrerkabine verbunden ist, wobei der zweite Arm beabstandet zu einem Fahrgestellrahmen, insbesondere zu einem Längsrahmenelement eines Fahrgestellrahmens, angeordnet ist.

Der erste Arm ist vorzugsweise schraubtechnisch am Rahmen der Fahrerkabine angebunden. Dies vermeidet wärmebedingte Verzüge wie sie beispielsweise bei einer Schweißverbindung auftreten können. Die Anbindung erfolgt bevorzugt in dem Bereich des Rahmens, wo eine unfallbedingte Krafteinwirkung am wahrscheinlichsten zu erwarten ist.

Der erste Arm ist dabei im Wesentlichen in Fahrzeughochrichtung ausgerichtet.

Der Basisabschnitt ist vorzugsweise schraubtechnisch mit einem Längsträger der Fahrerkabine verbunden. Dies vermeidet wärmebedingte Verzüge wie sie beispielsweise bei einer Schweißverbindung auftreten können. Vorteilhafterweise ist der Längsträger unterhalb der Fahrerkabine oder in einem unteren Bereich des Rahmens angeordnet, so dass die aufgenommenen Kräfte unterhalb der Kabine abgeleitet werden.

Der Basisabschnitt ist dabei im Wesentlichen in Fahrzeuglängsrichtung ausgerichtet.

Der zweite Arm ist nicht mit dem Fahrgestellrahmen verbunden, sondern im Normalzustand zu diesem beabstandet. Der Abstand zwischen zweitem Arm und Fahrgestellrahmen beträgt zehn bis zwanzig Millimeter. Dadurch wird eine starre Verbindung zwischen der Fahrerkabine und dem Fahrgestellrahmen vermieden, die im normalen Fahrbetrieb unvorteilhaft wäre. Erst bei einer Krafteinwirkung auf das Verstärkungselement kommt der zweite Arm mit dem Fahrgestellrahmen in Anlage und einwirkende Kräfte können in den Fahrgestellrahmen eingeleitet werden. Dabei kann vorteilhafterweise ein Gummielement an dem zweiten Arm angeordnet sein, so dass im Normalbetrieb vorkommende Bewegungen der Fahrerkabine gegenüber dem Fahrgestellrahmen abgefedert und dabei entstehende störende Geräusche vermieden werden.

Der zweite Arm kommt dabei bevorzugt mit einem Längsrahmenelement des Fahrgestellrahmens in Anschlag.

Der zweite Arm ist im Wesentlichen in Fahrzeughochrichtung ausgerichtet.

Der erste Arm und der Basisabschnitt und der zweite Arm und der Basisabschnitt sind im Wesentlichen senkrecht zueinander ausgerichtet.

In dieser Anordnung nimmt das Verstärkungselement Kräfte auf, die auf die Frontseite des Nutzfahrzeugs einwirken, und leitet sie unterhalb der Fahrerkabine hin zu dem Fahrgestellrahmen ab. Dadurch wird die Krafteinwirkung auf den Rahmen der Fahrerkabine vermieden, dieser bleibt weitestgehend intakt und es findet kein Eindringen in den Innenraum der Fahrerkabine statt, so dass die Insassen geschützt werden. Es hat sich gezeigt, dass im Wesentlichen keine weiteren Verstärkungsteile für den Rahmen notwendig sind, so dass das die Fahrerkabine keine Nachteile hinsichtlich Gewicht erfährt. Allenfalls lokale Verstärkungen können im Einzelfall Sinn ergeben, was aber dennoch zu einer deutliche Gewichtseinsparung gegenüber einem vollverstärkten Rahmen führt.

Insbesondere hat sich gezeigt, dass ein mit einer derartigen Sicherheitsanordnung ausgestattetes Nutzfahrzeug den Vorgaben der ECE R29-03 genügt.

Je nach Gestaltung des Rahmens der Fahrerkabine wird das Verstärkungselement geometrisch angepasst. Beispielsweise kann die Länge des ersten Arms an die Konstruktion des Rahmens angepasst werden.

Auch durch Verstärkungskomponenten wie weiter oben beschrieben kann die Steifigkeit des Verstärkungselements an die Ausgestaltung des Rahmens angepasst werden.

Gleichermaßen kann das Verhalten des Verstärkungselements, etwa das Verformungsverhalten, bei Krafteinwirkung durch die konstruktive Ausgestaltung der einzelnen Blechteile oder das Vorsehen von Verstärkungskomponenten angepasst und gesteuert werden.

Bevorzugt werden zwei Verstärkungselemente in der Sicherheitsanordnung verwendet, die mit je einem an der rechten und linken Flanke verlaufenden Längsträger des Kabinenrahmens angebunden sind.

In einer besonderen Ausgestaltung der Erfindung ist vorgesehen, dass das Verstärkungselement über ein in dem Aufnahmebereich angeordnetes Gummilager mit dem Fahrgestellrahmen verbunden ist.

Das Gummilager ist in dem Übergangsbereich zwischen Basisabschnitt und erstem Arm angeordnet. Über das Gummilager ist der Kabinenrahmen mit dem Fahrgestellrahmen, insbesondere einem Längsrahmenelement, verbunden. Dadurch werden Bewegungen zwischen dem Kabinenrahmen und dem Fahrgestellrahmen gedämpft. Das Verstärkungselement stellt damit integral einen Lagerpunkt für den Rahmen der Fahrerkabine bereit.

Weiterhin bevorzugt ist vorgesehen, die A-Säulen des Nutzfahrzeugs mit Verstärkungsblechen versehen sind. Die Verstärkungsbleche stellen eine Erweiterung der Sicherheitsanordnung und verbessern die Stabilität der Fahrerkabine gegenüber einer Krafteinwirkung zusätzlich und schaffen damit zusätzliche Sicherheit für die Fahrzeuginsassen. Die Verstärkungsbleche können situativ abhängig von der Rahmenkonstruktion der Fahrerkabine zum Einsatz kommen, wenn eine erhöhte Stabilität gewünscht oder notwendig ist.

Die Verstärkungsbleche sind einfache Biege- und Stanzteile mit Ausnehmungen und/oder Ausbuchtungen, die an die jeweilige A-Säulenkonstruktion angepasst sind.

Bevorzugt sind die Verstärkungsbleche klebetechnisch an den A-Säulen angeordnet. Dadurch werden Materialverzüge vermieden, wie sie bei einer Schweißverbindung auftreten können. Durch die Klebeverbindung können die Verstärkungsbleche bei vorhandenen Fahrzeugen in einfacher Weise nachgerüstet werden. Die Geometrie der A-Säulen kann dabei genauso berücksichtigt werden, wie vorhandene Anschraubpunkte und dergleichen, für die Ausnehmungen und/oder Ausbuchtungen vorgesehen werden.

Weitere Merkmale der Erfindung ergeben sich aus den nachfolgenden Figuren und der zugehörigen Beschreibung. Dieselben Merkmale werden in den Zeichnungen mit denselben Bezugszeichen versehen.

Es zeigen:
- Figur 1: eine erfindungsgemäße Sicherheitsanordnung in einem Nutzfahrzeug,
- Figur 2: die Anordnung der Verstärkungselemente am Fahrgestellrahmen,
- Figur 3: ein Verstärkungselement in perspektivischer Darstellung,
- Figur 4: ein Verstärkungselement in einer weiteren perspektivischen Darstellung,
- Figur 5: ein Verstärkungselement in einer Seitenansicht,
- Figur 6: ein Verstärkungselement in einer Ansicht von unten,
- Figur 7: ein Verstärkungsblech.

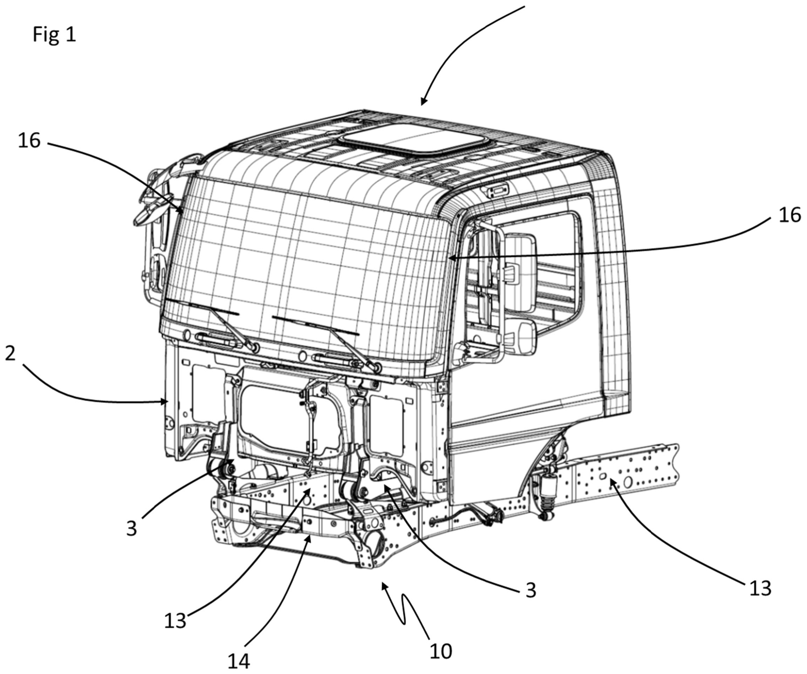

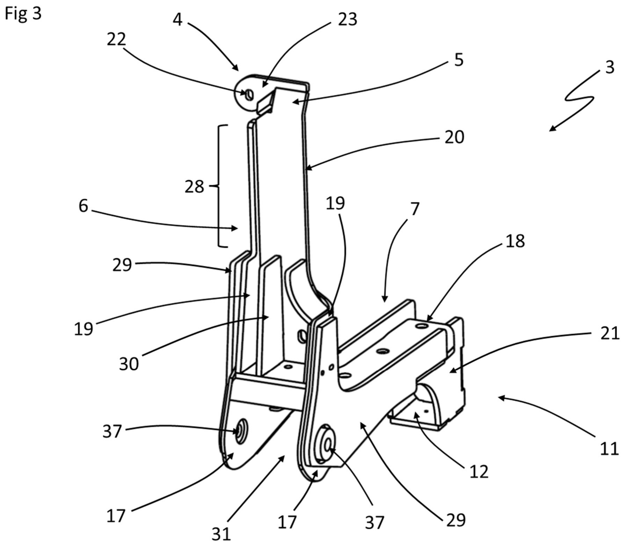

In Figur 1 ist die Fahrerkabine 1 eines ansonsten nicht weiter dargestellten Nutzfahrzeugs gezeigt. Die Fahrerkabine 1 wird strukturell aus einem Rahmen 2 gebildet, der weitere Komponenten, wie Rückwand, Türen und dergleichen trägt. Bei einem Unfall wirken Kräfte auf die Rahmenelemente ein, die sich verformen können und dabei in den Innenraum der Fahrerkabine 1 eindringen können, was die Insassen gefährdet. Um dies zu verhindern ist eine Sicherheitsanordnung mit zwei Verstärkungselementen 3 vorgesehen, wie sie in den Figuren 3ff im Detail beschrieben sind.

Ein Verstärkungselement ist an einer Anbindungsstelle 4, die sich an dem freien Ende 5 eines ersten Arms 6 befindet, schraubtechnisch mit einem frontseitigen Rahmenelement der Fahrerkabine 1 verbunden. Der erste Arm 6 erstreckt sich im Wesentlichen in Fahrzeughochrichtung. Der erste Arm 6 ist, auf die Fahrzeughochrichtung bezogen, in dem Bereich der Fahrerkabine 1 angebunden, in dem eine unfallbedingte Krafteinwirkung am wahrscheinlichsten zu erwarten ist oder wo die optimale Kraftaufnahme erfolgen kann. In diesem Ausführungsbeispiel ist der erste Arm 6 unterhalb der Windschutzscheibe angebunden. Er nimmt die auf die Fahrzeugfront einwirkenden Kräfte auf und leitet sie in den Basisabschnitt 7 ein, der schraubtechnisch mit einem Längsträger 8 des Kabinenrahmens 2 verbunden ist. Der Basisabschnitt 7 erstreckt sich im Wesentlichen in Fahrzeuglängsrichtung. Die einwirkenden Kräfte werden dann unterhalb der Fahrerkabine 1 abgeleitet.

In dem Übergangsbereich zwischen dem ersten Arm 6 und dem Basisabschnitt 7 ist ein Gummilager 9 angeordnet, das einen Lagerpunkt des Rahmens 2 der Fahrerkabine 1 an dem Fahrgestellrahmen 10 darstellt. Vorteilhafterweise stellt das Verstärkungselement 3 diesen Lagerpunkt integral bereit.

Das Gummilager 9 erlaubt eine rotatorische Bewegung und bildet somit einen Drehpunkt für die Fahrerkabine 1. Bei Krafteinwirkung auf die Front der Fahrerkabine 1 dreht diese um den Lagerpunkt. Das führt dazu dass der zweite Arm 11 des Verstärkungselements 3 mit seiner Brücke 12 und dem daran angeordneten Gummielement mit dem Fahrgestellrahmen 10 in Anlage kommt, so dass die einwirkenden Kräfte in den Fahrgestellrahmen 10 abgeleitet werden.

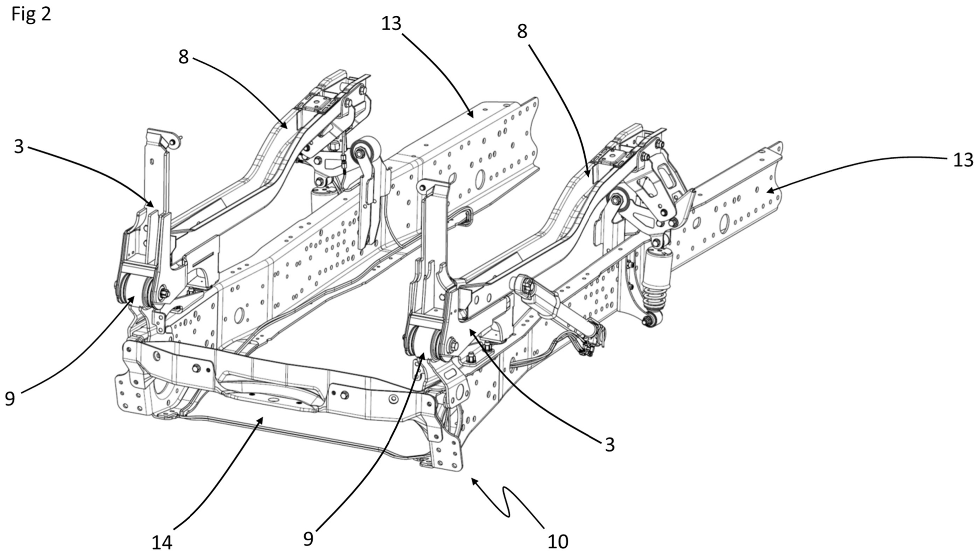

In diesem Ausführungsbeispiel weist der Fahrgestellrahmen 10 zwei Längsrahmenelemente 13 auf, die frontseitig mit einem Querrahmenelement 14 verbunden sind. An dem frontseitigen Ende der Längsrahmenelemente 13 sind auch die Anbindungspunkte für die Gummilager 9 vorgesehen. Die Verstärkungselemente 3 kommen mit den Längsrahmenelementen 13 in Anlage, so dass die Krafteinleitung dort erfolgt. Eine Detaildarstellung von Verstärkungselementen 3 und Fahrgestellrahmen 10 ist in Figur 2 gezeigt.

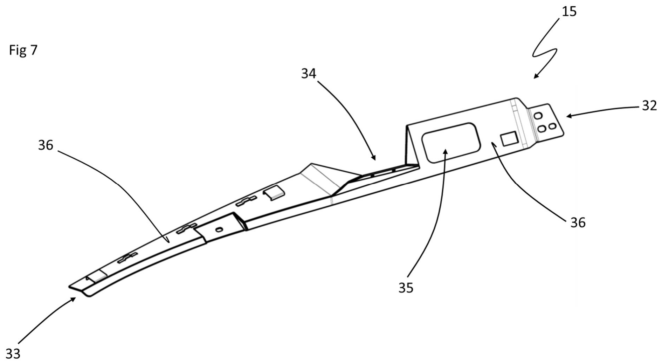

Der Rahmen 2 der Fahrerkabine 1 muss daher keine oder nur einen Teil der einwirkenden Kräfte aufnehmen. Eine umfangreiche Verstärkung des Rahmens 2 ist nicht notwendig. Sollten im Einzelfall die Verstärkungselemente 3 nicht ausreichend sein, um die Integrität des Kabinenrahmens 2 zu ermöglichen, sind lokale Verstärkungsbleche 15 in den A-Säulen 16 der Fahrerkabine vorgesehen. Diese sind in Figur 7 noch einmal einzeln dargestellt. Bei den Verstärkungsblechen 15 handelt es sich um einfache Stanz- und Biegeteile, die klebetechnisch an den A-Säulen 16 angeordnet sind. Sie sind damit zur einfachen Nachrüstung vorhandener Nutzfahrzeuge geeignet. Durch die klebetechnische Verbindung wird die strukturelle Stabilität der A-Säulen 16 nicht vermindert.

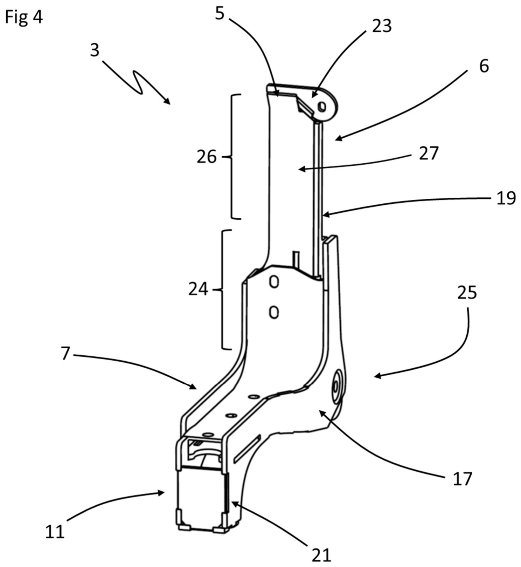

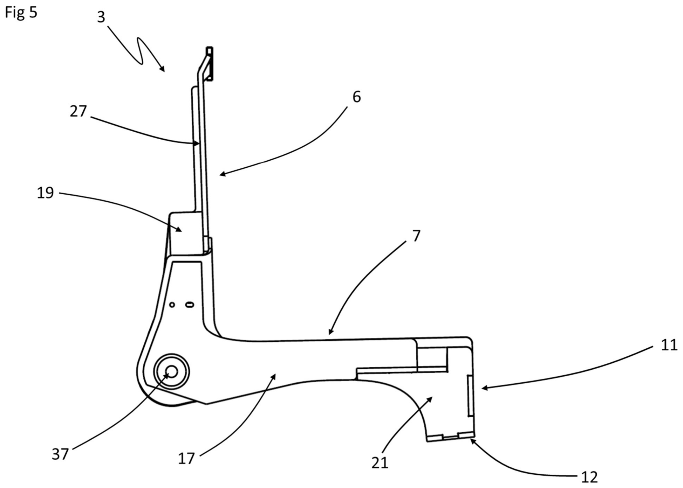

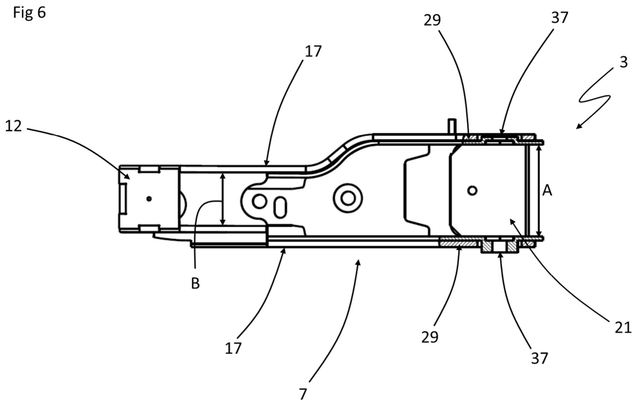

Die Figuren 3 bis 6 zeigen ein Verstärkungselement 3 in verschiedenen Perspektiven.

Das Verstärkungselement 3 weist einen sich in Einbaulage in Fahrzeuglängsrichtung erstreckenden Basisabschnitt 7 und einen sich am frontseitigen Ende des Basisabschnitts 7 in Fahrzeughochrichtung nach oben erstreckenden ersten Arm 6 und einen sich am heckseitigen Ende des Basisabschnitts 7 in Fahrzeughochrichtung nach unten erstreckenden zweiten Arm 11 auf. Der Basisabschnitt 7 weist zwei voneinander beabstandete Seitenwände 17 und einen diese verbindenden ersten Steg 18 auf. Der erste Arm 6 weist zwei voneinander beabstandete Seitenflächen 19 und einen diese verbindenden zweiten Steg 20 auf. Der zweite Arm 11 weist zwei Seitenabschnitte 21 auf, die an ihrem freien Ende durch eine Brücke 12 verbunden sind.

Die einzelnen Abschnitte des Verstärkungselements sind somit zumindest abschnittsweise als C- oder Hohlprofile ausgestaltet und bieten eine hohe Stabilität und Steifigkeit bei gleichzeitig geringem Gewicht.

Das freie Ende 5 des ersten Arms 6 ist als Anbindungsstelle 4 ausgebildet. Als solche ist dort ein Schraubloch 22 vorgesehen, das mit einer hier nicht näher dargestellten Schraubhülse versehen sein kann. Das Schraubloch 22 ist in einem Metallelement 23 angeordnet, das mit dem freien Ende 5 verschweißt ist. Dieses ist zudem abgewinkelt. Dadurch ist das freie Ende 5 optimal an die Anbindungsstelle an dem Rahmen 2 angepasst, so dass eine optimale Krafteinleitung erfolgen kann. Das freie Ende 5 des ersten Arms 6 wird über Schraubloch 22 und Schraubhülse mit einem Rahmenelement der Fahrerkabine 1 verschraubt.

Der Basisabschnitt 7 und ein erster Abschnitt 24 des ersten Arms 6 werden von einem Grundelement 25 gebildet. Dieses bildet gewissermaßen einen Basiskörper an den weitere Komponenten schweißtechnisch angeordnet werden können. Durch dieses einstückig, materialeinheitlich ausgeführte Grundelement 25 erhält das Verstärkungselement 3 eine hohe Einsatzflexibilität, da es durch die Anbauteile an verschiedene Einsatzzwecke angepasst werden kann.

Ein zweiter Abschnitt 26 des ersten Arms 6 wird von einem Blechteil 27 gebildet, das an das Grundelement 25 angeschweißt ist. Dieses Blechteil 27 bildet auch einen Teil des zweiten Stegs 20 und der Seitenflächen 19 des ersten Arms 6. Allerdings ist in diesem Endabschnitt 28 des ersten Arms 6 das Blechteil 27 nur an einem längsseitigen Rand mit einer Seitenfläche 19 versehen. Dadurch weist der erste Arm 6 in dem Endabschnitt 28 eine geringere Steifigkeit auf als in seinem ersten Abschnitt 24. Der Endabschnitt 28 fungiert somit als Sollbiegestelle. Das bedeutet, dass sich der Endabschnitt 28 unter Krafteinwirkung gezielt verformt, wodurch bereits Energie abgebaut wird.

Gleichzeitig ist der erste Abschnitt 24 des ersten Arms 6 mit ersten und zweiten Verstärkungskomponenten 29,30 versehen. Die ersten Verstärkungskomponenten 29 sind Blechteile die vorzugsweise auf die Seitenwände 17, die Seitenflächen 19 und Seitenabschnitte 21 geschweißt werden, um diese lokal gezielt zu verstärken. Die zweiten Verstärkungskomponenten 30 werden zwischen den Seitenwänden 17, den Seitenflächen 19 und den Seitenabschnitten 21 angeordnet, um lokal die Steifigkeit zu erhöhen. Damit kann das Verstärkungselement 3 flexibel und bedarfsgerecht konstruiert werden.

Der erste Abschnitt 24 des ersten Arms 6 hat also eine erhöhte Steifigkeit gegenüber dem zweiten Abschnitt 26, so dass lediglich der Endabschnitt 28 verformt wird, während der erste Abschnitt stabil bleibt, um die verbleibenden Kräfte weiterzuleiten.

In dem Übergangsbereich zwischen dem Basisabschnitt 7 und dem ersten Arm 6, also im Bereich des frontseitigen Endes des Basisabschnitts 7 ist ein Aufnahmebereich 31 für ein Gummilager 9 vorgesehen, das hier nicht näher dargestellt ist. Der Abstand A der Seitenwände 17 des Basisabschnitts 7 ist frontseitig größer als deren Abstand B im heckseitigen Bereich. Dadurch wird Raum für das Gummilager 9 geschaffen. Zudem sind in dem frontseitigen Endbereich des Basisabschnitts 7 die Seitenwände 17 mit ersten Verstärkungskomponenten 29 verbreitert. Da dort die Fahrerkabine 1 mit dem Fahrgestellrahmen 10 verbunden ist, wirken an dieser Stelle auch im Normalbetrieb hohe Kräfte, so dass eine höhere Steifigkeit des Verbindungselements 3 erwünscht ist. Die Seitenwände 17 weisen zudem gegenüberliegende, fluchtende Lageröffnungen 37 auf, in denen das Gummilager 9 angeordnet werden kann.

Im eingebauten Zustand ist die Brücke 12, die die Seitenabschnitte 21 des zweiten Arms 11 verbindet, mit einem Gummielement versehen, das hier nicht näher dargestellt ist.

Bei dem Verstärkungsblech 15 handelt es sich um ein einfaches Blechteil, das an der A-Säule 16 des Kabinenrahmens 2 angeordnet ist. Es erstreckt sich dabei im Wesentlichen in Fahrzeughochrichtung, wobei ein erstes Ende 32 dabei nach unten weist, während ein zweites Ende 33 nach oben weist. Das Verstärkungsblech 15 weist Ausbuchtungen 34 und Ausnehmungen 35 auf, die den in der zu verstärkenden A-Säule 16 vorhandenen Komponenten und Strukturen Rechnung tragen. Das Verstärkungsblech 15 kann bei Bedarf zum Einsatz kommen, wenn sich eine zusätzliche Verstärkung in der Sicherheitsanordnung als notwendig erweist. Das Verstärkungsblech 15 weist Klebeflächen 36 auf, auf denen Klebstoff aufgetragen wird und die mit der A-Säule vollflächig in Anlage kommen.

Durch diese lokale frontseitige Verstärkung wird die Widerstandsfähigkeit der Fahrerkabine 1 gegenüber frontseitiger Krafteinwirkung ohne wesentliche Gewichtsnachteile weiter verbessert.

### Bezugszeichen

- 1: Fahrerkabine
- 2: Rahmen
- 3: Verstärkungselement
- 4: Anbindungsstelle
- 5: freies Ende von 6
- 6: erster Arm von 3
- 7: Basisabschnitt von 3
- 8: Längsträger
- 9: Gummilager
- 10: Fahrgestellrahmen
- 11: zweiter Arm von 3
- 12: Brücke
- 13: Längsrahmenelement
- 14: Querrahmenelement
- 15: Verstärkungsblech
- 16: A-Säule
- 17: Seitenwand
- 18: erster Steg
- 19: Seitenfläche
- 20: zweiter Steg
- 21: Seitenabschnitt
- 22: Schraubloch
- 23: Metallelement
- 24: erster Abschnitt von 6
- 25: Grundelement
- 26: zweiter Abschnitt von 6
- 27: Blechteil
- 28: Endabschnitt
- 29: erste Verstärkungskomponente
- 30: zweite Verstärkungskomponente
- 31: Aufnahmebereich
- 32: erstes Ende von 15
- 33: zweites Ende von 15
- 34: Ausbuchtung
- 35: Ausnehmung
- 36: Klebefläche
- 37: Lageröffnung
- A: Abstand
- B: Abstand

## Patentansprüche

1. Verstärkungselement (3) für die Fahrerkabine (1) eines Nutzfahrzeugs mit einem sich in Fahrzeuglängsrichtung erstreckenden Basisabschnitt (7) und einem sich am frontseitigen Ende des Basisabschnitts (7) in Fahrzeughochrichtung nach oben erstreckenden ersten Arm (6) und einem sich am heckseitigen Ende des Basisabschnitts (7) in Fahrzeughochrichtung nach unten erstreckenden zweiten Arm (11),
wobei der Basisabschnitt (7) zumindest abschnittsweise zwei voneinander beabstandete Seitenwände (17) und einen diese verbindenden ersten Steg (18) aufweist, wobei der erste Arm (6) zumindest abschnittsweise zwei voneinander beabstandete Seitenflächen (19) und einen diese verbindenden zweiten Steg (20) aufweist, wobei der zweite Arm (11) zwei Seitenabschnitte (21) aufweist, die an ihrem freien Ende durch eine Brücke (12) verbunden sind.

2. Verstärkungselement (3) nach Anspruch 1 **dadurch gekennzeichnet, dass** der erste Arm (6) an seinem freien Ende eine Anbindungsstelle (4) aufweist.

3. Verstärkungselement (3) nach Anspruch 1 oder 2 **dadurch gekennzeichnet, dass** ein Endabschnitt (28) des ersten Arms (6) als Sollbiegestelle ausgebildet ist.

4. Verstärkungselement (3) nach Anspruch 3 **dadurch gekennzeichnet, dass** in dem Endabschnitt (28) nur an einem längsseitigen Rand des zweiten Steges (29) eine Seitenfläche (19) ausgebildet ist.

5. Verstärkungselement (3) nach zumindest einem der vorstehenden Ansprüche **dadurch gekennzeichnet, dass** der Abstand A,B der Seitenwände (17) des Basisabschnitts (7) frontseitig größer ist als heckseitig, so dass das frontseitige Ende des Basisabschnitts (7) als Aufnahmebereich für ein Gummilager (9) ausgebildet ist.

6. Verstärkungselement (3) nach zumindest einem der vorstehenden Ansprüche **dadurch gekennzeichnet, dass** das Verstärkungselement (3) ein Grundelement (25) umfasst, das den Basisabschnitt (7), die Seitenabschnitte (21) des zweiten Arms (11) und einen ersten Abschnitt (24) des ersten Arms (6) bildet.

7. Verstärkungselement (3) nach Anspruch 6 **dadurch gekennzeichnet, dass** ein zweiter Abschnitt (26) des ersten Arms (6) aus einem mit dem Grundelement (25) verbundenen Blechteil (27) gebildet ist.

8. Verstärkungselement (3) nach Anspruch 6 oder 7 **dadurch gekennzeichnet, dass** die Seitenwände (17) des Basisabschnitts (7) und/oder die Seitenflächen (19) des ersten Arms (6) und/oder die Seitenabschnitte (21) des zweiten Arms (11) einstückig, materialeinheitlich ausgebildet sind.

9. Verstärkungselement (3) nach zumindest einem der vorstehenden Ansprüche **dadurch gekennzeichnet, dass** die Seitenwände (17) des Basisabschnitts (7) und/oder die Seitenflächen (19) des ersten Arms (6) und/oder die Seitenabschnitte (21) des zweiten Arms (11) zumindest bereichsweise mit ersten Verstärkungskomponenten (29) versehen sind.

10. Verstärkungselement (3) nach zumindest einem der vorstehenden Ansprüche **dadurch gekennzeichnet, dass** zwischen den Seitenwänden (17) des Basisabschnitts (7) und/oder den Seitenflächen (19) des ersten Arms (6) und/oder den Seitenabschnitten (21) des zweiten Arms (11) zumindest abschnittsweise zweite Verstärkungskomponenten (30) angeordnet sind.

11. Sicherheitsanordnung für ein Nutzfahrzeug mit zumindest einem Verstärkungselement (3) nach zumindest einem der vorstehenden Ansprüche, wobei der erste Arm (6) mit einem frontseitigen Rahmenelement der Fahrerkabine (1) verbunden ist, wobei der Basisabschnitt (7) mit einem Längsträger (8) der Fahrerkabine (1) verbunden ist, wobei der zweite Arm (11) beabstandet zu einem Fahrgestellrahmen (10), insbesondere zu einem Längsrahmenelement (13) eines Fahrgestellrahmens (10), angeordnet ist.

12. Sicherheitsanordnung nach Anspruch 11 **dadurch gekennzeichnet, dass** das Verstärkungselement (3) schraubtechnisch angebunden ist.

13. Sicherheitsanordnung nach Anspruch 11 oder 12 **dadurch gekennzeichnet, dass** das Verstärkungselement (3) über ein in dem Aufnahmebereich (31) angeordnetes Gummilager (9) mit dem Fahrgestellrahmen (10) verbunden ist.

14. Sicherheitsanordnung nach zumindest einem der Ansprüche 11 bis 13 **dadurch gekennzeichnet, dass** die A-Säulen (16) des Nutzfahrzeugs mit Verstärkungsblechen (15) versehen sind.

15. Sicherheitsanordnung nach Anspruch 14 **dadurch gekennzeichnet, dass** die Verstärkungsbleche (15) klebetechnisch an den A-Säulen (16) angeordnet sind.
